# EUROPÄISCHE PATENTSCHRIFT

(11) **EP 0 910 541 B1**
(45) Veröffentlichungstag und Bekanntmachung des Hinweises auf die Patenterteilung: **02.04.2003**
(21) Anmeldenummer: 97912058.1
(22) Anmeldetag: 16.10.1997
(51) Int. Cl.: B65G 69/18

(54) **DICHTSYSTEM FÜR EINE SCHLIESSKLAPPE AN EINER DURCHLASSÖFFNUNG**
SEALING SYSTEM FOR A CLOSING FLAP ON A THROUGH OPENING
SYSTEME D'ETANCHEITE POUR CLAPET DE FERMETURE D'UN ORIFICE DE PASSAGE

(30) Priorität: 19.10.1996 DE 19643248
(43) Veröffentlichungstag der Anmeldung: 28.04.1999
(73) Patentinhaber: Glatt Systemtechnik GmbH, 01277 Dresden (DE)
(72) Erfinder: BRETSCHNEIDER, Frank, D-01465 Liegau-Augustusbad (DE); KÜHNEMUND, Willibald, D-01097 Dresden (DE)
(74) Vertreter: Pätzelt, Peter, Dipl.-Ing.
(86) Internationale Anmeldenummer: DE9702376
(87) Internationale Veröffentlichungsnummer: WO98017561

(56) Entgegenhaltungen:
- EP-A- 0 447 023
- EP-B- 0 747 307
- DE-C- 4 342 962
- DE-C- 19 520 409
- FR-A- 2 341 796
- FR-A- 2 640 598

## Beschreibung

Die Erfindung betrifft ein Dichtsystem für eine Schließklappe an einer Durchlaßöffnung einer Einrichtung, die geeignet ist, mit gleichartigen Schließklappen an anderen Einrichtungen derart zusammenzuwirken, daß sie in gekuppelter Stellung der Einrichtungen aneinanderliegen und gemeinsam geöffnet werden können, so daß die Innenräume der beiden Einrichtungen miteinander verbunden werden können.

Einrichtungen können dabei Transport- oder Lagerbehälter, Transfereinrichtungen oder Bearbeitungs- bzw. Behandlungsmaschinen u. ä. sein.

Die Produkte, die mit oder in derartigen Einrichtungen transportiert oder transferiert werden, sind meist fließfähige, z.B. teilchenförmige, flüssige oder pastöse Güter. Dabei handelt es sich bei den Gütern oft um Produkte mit einem Wirkstoff und/oder einem Hilfsstoff zur Herstellung eines Arzneimittels oder sonstiger chemischer Produkte, die in der Umwelt und insbesondere beim Menschen zu negativen Wirkungen führen können. Deshalb ist es erforderlich, diese Güter möglichst unter weitgehend hermetischer Abdichtung zu behandeln, zu transportieren und zu transferieren.

Nach dem Stand der Technik sind verschiedene Schließklappen bzw. Schließklappensysteme bekannt, mit denen die einzelnen Einrichtungen einmal in Alleinstellung abgedichtet werden können und zum anderen, nach dem Kuppeln der zusammenwirkenden Einrichtungen, die Schließklappen der beiden Einrichtungen gemeinsam in paralleler Lage um eine gemeinsame Achse in eine Öffnungsstellung gebracht werden können.

Die DE 43 42 962 C1 gibt eine Vorrichtung zum Kuppeln von zwei Behältnissen an, bei der zum Transferieren eines Gutes zwischen den zwei Behältnissen an zwei gleichartigen Rohrstutzen je eine Schließklappe vorhanden ist. In Alleinstellung der Behältnisse sind die Schließklappen in elastischen Ringdichtungen, sogenannten Dichtwülsten, an den Stirnseiten der Rohrstutzen eingeklemmt und dichten die Behältnisse ab. In gekuppelter Stellung, wenn die beiden Gehäuse mit den Stirnflachen ihrer Rohrstutzen aneinanderstoßen, werden die Dichtwülste derart verformt, daß die Klemmwirkung der Dichtwülste gegenüber den Schließklappen, die in dieser Stellung dicht aufeinander liegen, verringert wird. Die Schließklappen können danach in den Rohrstutzen gemeinsam verdreht werden, wobei die Schwenkachsen der beiden Klappen in einer gemeinsamen Achse liegen.

Die DE 195 20 409 C1 gibt eine Vorrichtung zum Kuppeln von Behältnissen mit einer Blas- und Absaugeinrichtung an, bei der eine elastische Dichtwulst die Stirnseite eines Rohrstutzens umschließt, die in der Schließstellung der Schließklappe zur Abdichtung gegenüber der Durchlaßöffnung am Umfang der Schließklappe anliegt. Die Schließklappe ist mit einer gleichartigen Schließklappe einer zweiten Einrichtung in eine gekuppelte Stellung bringbar, wobei in der gekuppelten Stellung die elastische Dichtwulst in einer Dichtebene an der entsprechenden elastische Dichtwulst der zweiten Einrichtung anliegt.

Da zwischen den Schließklappen keine Dichtung vorhanden ist, kann in geöffneter Stellung transferiertes Gut zwischen die Schließklappen gelangen. Dieses Gut kann, da die elastische Wulst in gekuppelter Stellung die Dichtebene zumindest teilweise überragt und zwischen den Schließklappen eine Stoßkammer entsteht, nach dem Transferieren mittels einer Blaseinrichtung ausgeblasen werden.

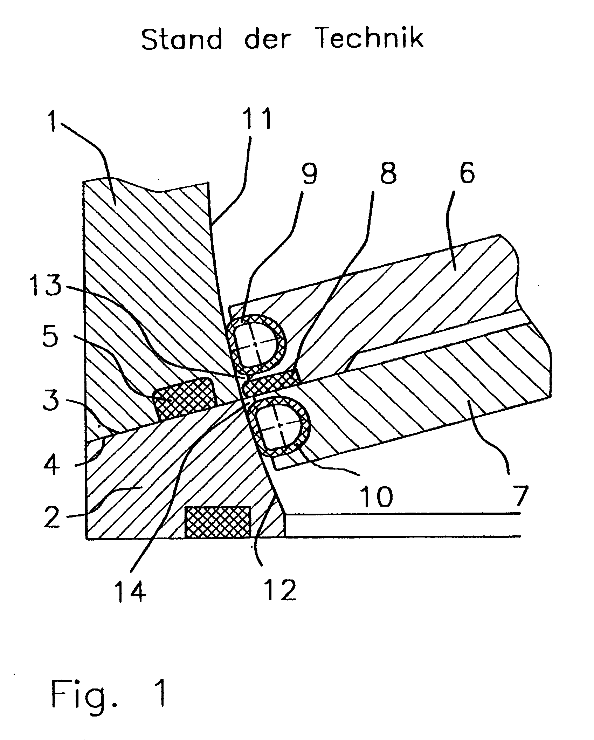

Es wurde auch bereits vorgeschlagen, die Abdichtung der Schließklappen gegenüber den jeweiligen Durchlaßöffnungen derart zu realisieren, daß am Umfang der Schließklappen eine Dichtung vorhanden ist, die in der Schließstellung mittels innerem Überdruck an die jeweilige Dichtfläche der Durchflußöffnung gepreßt wird. Die Dichtung liegt dabei in einer Nut der Schließklappen. In Figur 1 ist eine derartige Lösung dargestellt.

Der in Figur 1 dargestellte Stand der Technik dient zur Erläuterung der Erfindung. Dabei sind zwei verschiedene Einrichtungen 1 und 2 miteinander gekuppelt. Zwischen den ebenen Dichtflächen 3 und 4 befindet sich ein Dichtring 5. In der Ebene der Dichtflächen 3 und 4 liegen auch die beiden Schließklappen 6 und 7 aneinander. Am äußeren Rand sind die beiden Schließklappen 6 und 7 zueinander mit einer Flachringdichtung 8 abgedichtet. In entsprechenden Nuten am Umfang der Schließklappen 6 und 7 befinden sich die Dichtungen 9 und 10, welche in der geschlossenen Stellung, sowohl in gekuppelter Position wie in Alleinstellung der jeweiligen Einrichtung 1 oder 2, mit innerem Überdruck beaufschlagt werden können und sich, wie in der Figur 1 dargestellt, an die kugelförmigen Dichtflächen 11 und 12 anlegen. Bei diesem Stand der Technik entstehen konstruktionsbedingt zwangsläufig die miteinander"verbundenen Ringspalte 13 und 14 als freie Räume. Wenn die Schließklappen 6 und 7 zum Öffnen gemeinsam geschwenkt werden, dann lagert sich in den Räumen 13 und 14 transferiertes Gut ab, welches beim nachfolgedem Schließen der Schließklappen und dem Trennen der beiden Einrichtungen 1 und 2 voneinander ungehindert in die Umgebung gelangen kann.

Die bekannten Lösungen haben den Nachteil, daß im Bereich des äußeren Umfanges der Schließklappen zwischen den einzelnen Dichtungen Ringspalte vorhanden sind, in denen sich transferiertes Gut ablagern kann, welches nach dem Entkuppeln der entsprechenden Einrichtungen oder Behältnisse in unerwünschter Weise in die Umgebung gelangt.

Der Erfindung liegt als Aufgabe zugrunde, ein Dichtsystem für eine Schließklappe an einer Durchlaßöffnung der eingangs genannten Art anzugeben, die geeignet ist, mit gleichartigen Schließklappen an anderen Einrichtungen zusammenzuwirken, wobei in gekuppelter und geschlossener Stellung der Schließklappen zwischen diesen und zu den jeweiligen Einrichtungen im Bereich des äußeren Umfanges der Schließklappen keine Ringspalte gebildet werden, in denen sich Reste des transportierten oder transferierten Gutes anlagern können.

Die Erfindung löst die Aufgabe durch die im kennzeichnenden Teil des Anspruchs 1 genannten Merkmale. Weiterbildungen der Erfindung sind in den Unteransprüchen gekennzeichnet.

Der Kern der Erfindung besteht darin, daß am Umfang der zusammenwirkenden und in gekuppelter Stellung in einer Dichtebene aneinanderliegenden Schließklappen in je einer Nut Dichtungen mit einem inneren Hohlraum angeordnet sind, die in nicht gekuppelter, jedoch geschlossener Stellung der Schließklappen, mit ihrer Umfangsfläche an den Dichtflächen der zugehörigen Einrichtungen anliegen und mit einer elastischen Wulst axial über die Dichtebene zwischen den beiden Schließklappen hinausragen.

Zur Abdichtung der Schließklappen gegenüber der Durchflußöffnung kann die erforderliche Dichtkraft alternativ über Elastizitätskräfte der Dichtung oder unter der Wirkung eines von innen wirkenden Druckmediums erzeugt werden.

Wenn die entsprechenden Einrichtungen miteinander gekuppelt werden, wird die elastische Wulst bis in die Dichtebene zurückgepresst, wobei die Dichtung mit der Wulst zwangsläufig derart verformt werden, daß alle konstruktionsbedingten Ringspalte im äußeren Bereich der parallel aneinanderliegenden zwei Schließklappen bis zu der Dichtfläche in der Durchlaßöffnung mit der Dichtung ausgefüllt sind. Dadurch wird gesichert, daß in der Offen-Stellung der Schließklappen kein Raum vorhanden ist, in dem sich transferiertes Gut ablagern kann.

Im Falle, daß die Dichtkraft durch Elastizitätskräfte der Dichtung erzeugt wurde, wird im Hohlraum der Dichtung ein Vakuum erzeugt, damit die Dichtkraft durch den Atmosphärendruck derart vermindert oder aufgehoben wird, daß die Schließklappen betätigt werden können.

Die elastische Wulst an der Dichtung wird beim Kuppeln der entsprechenden Einrichtungen im wesentlichen ebenfalls wie beschrieben verformt. Im Ausführungsbeispiel ist diese Ausführungsform näher dargestellt.

Die Gestaltung der Dichtung kann im Rahmen der Erfindung auch abgewandelt werden. So kann die Dichtung ringförmige elastische Streifen aufweisen, die weitere Dichtfunktionen oder auch Haltefunktionen erfüllen können. Die Dichtung kann dabei die gesamte Mantelfläche der Schließklappe umschließen. Erfindungswesentlich ist, daß die Dichtung nach dem Innenraum der Einrichtung hin eine ausreichende Abstützung erhält und die Wulst an der Dichtung beim Zusammentreffen der beiden zusammenwirkenden Schließklappen im erfindungsgemäßen Umfang verformt wird.

Der Vorteil der Erfindung besteht im wesentlichen darin, daß entsprechend der Aufgabenstellung nach dem Kuppeln der beiden entsprechenden Einrichtungen zum Transferieren eines fließfähigen Gutes und wieder Entkuppeln der Einrichtungen praktisch kein derartiges Gut in die Umgebung gelangen kann.

Die Erfindung soll nachstehend in einem Ausführungsbeispiel näher erläutert werden.

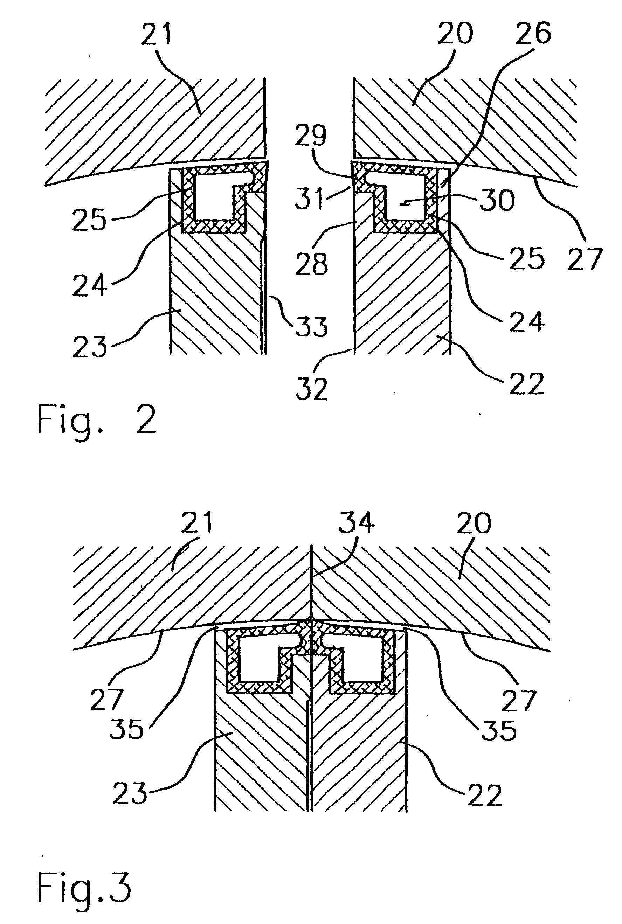

Die zugehörigen Zeichnungen zeigen in Figur 1 eine Lösung nach dem Stand der Technik. Die Figuren 2 bis 5 zeigen einen Ausschnitt am Umfang der Schließklappen in verschiedenen Stellungen für eine erfindungsgemäße Lösung.

In den Figuren 2 bis 5 ist das erfindungsgemäße Dichtsystem in einem Ausführungsbeispiel in verschiedenen Positionen dargestellt.

In Figur 2 sind zwei verschiedene Einrichtungen 20 und 21, das können beispielsweise ein Transportbehälter und ein Lagerbehälter oder ein Vorratsbehälter und eine Verarbeitungseinrichtung sein, in ungekuppelter Position dargestellt. Zugehörig zur Einrichtung 20 ist eine Schließklappe 22 und zur Einrichtung 21 eine Schließklappe 23. In äquivalenter Weise ist am Umfang an den einzelnen Schließklappen 22 und 23 eine Nut 24 eingearbeitet, in der die erfindungsgemäße Dichtung 25 gehaltert ist.

Am Beispiel der Schließklappe 22 wird die erfindungsgemäße Ausbildung des Dichtsystems näher erläutert. Die Nut 24 weist nach dem Innenraum der Einrichtung 20 hin, einen Schenkel 26 auf, der bis nahe an die kugelförmige Dichtfläche 27 in der Durchflußöffnung heranreicht. Der Schenkel 26 soll beim Bewegen der Schließklappe 22 nicht mit der Dichtfläche 27 in Berührung kommen, aber die Dichtung 25 soll auf dieser Seite großflächig abgestützt werden.

Auf der anderen Seite der Nut 24 ist der entsprechende Schenkel 28 radial verkürzt ausgebildet. Die Dichtung 25 füllt die gesamte Nut 24 aus. Erfindungsgemäß weist die Dichtung 25 eine Wulst 29 auf die den radial verkürzten Schenkel 28 in axialer Länge der Durchflußöffnung übergreift.

Die Dichtung 25 ist hohl ausgebildet, wobei der Hohlraum 30 auch in die Wulst 29 eingreift. Im Beispiel ist an der Wulst 29 eine schräge Dichtfläche 31 ausgebildet, derart daß die Dichtfläche 31 gegenüber der äußeren Fläche 32 der Schließklappe 22 im radial äußeren Bereich weiter hervorsteht als im inneren Bereich. Die Dichtung 25 weist im dargestellten Ruhezustand einen geringen Abstand zur Dichtfläche 27 in der Durchflußöffnung auf.

In Figur 3 sind die beiden Einrichtungen 20 und 21 gegeneinanderbewegt und miteinander gekuppelt worden. Die Schließklappen 22 und 23 liegen mit ihren Flächen 32 und 33 in der Dichteben 34 dicht aufeinander. Dabei werden die Wülste 29 an den beiden Dichtungen 25 derart verformt, daß sie dicht aneinander liegen und gemeinsam nach außen bis an die kugelförmige Dichtfläche 27 reichen. Die Verformung ist nur so stark, daß die beiden Dichtungen 25 im Bereich der Berührungsebene 34 an den Dichtflächen 27 leicht anliegen. Die Dichtkraft gegenüber den Dichtflächen 27, ist dabei in der Art einer Lippendichtung so gering, daß die Schließklappen 22 und 23 gemeinsam leicht geschwenkt werden können, damit der Durchfluß für das jeweilige Gut freigegeben wird. Die gemeinsame Mantelfläche der aneinanderllegenden Schließklappen 22 und 23, einschließlich der beiden Dichtungen 25 weist keine wesentlichen Ringspalte auf.

Im Vergleich zum Stand der Technik, wie er in der Figur 1 dargestellt wurde, ist in Figur 3 deutlich zu erkennen, daß keine ähnlichen Räume wie die Ringspalte 13 oder 14 in Figur 1 vorhanden sind.

Wenn die Schließklappen 22 und 23 nach dem öffnen wieder in die Schließstellung geschwenkt werden, kann sich transferiertes Gut zwar in den nach innen offenen Räumen 35 ablagern, dieses Gut gelangt aber nach dem Schließen der Schließklappen 22 und 23 nicht nach außen und kann somit auch die Umgebung nicht belasten.

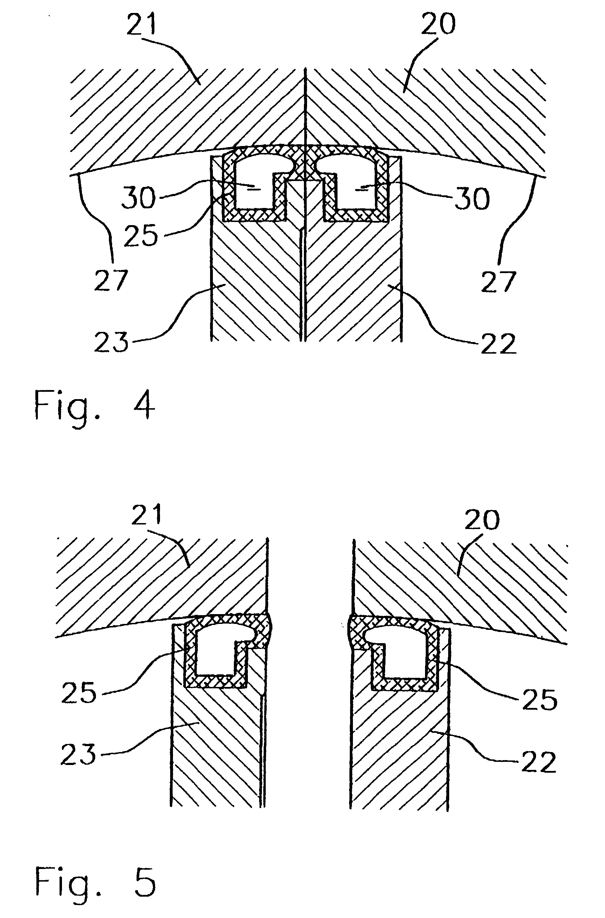

In Figur 4 zeigt die Position der Dichtungen 25 in der Schließstellung der Schließklappen 22 und 23 bevor die Einrichtungen 20 und 21 voneinander getrennt werden. In dieser Position wurde in den Hohlraum 30 innerhalb der Dichtung 25 ein Druckmittel z. B. Druckluft eingebracht und die Dichtung 25 wird mit großer Dichtkraft und mit seiner gesamten Mantelfläche gegen die jeweilige Dichtfläche 27 gepreßt.

Abgelagertes Gut, welches in den Räumen 35 nach Figur 3 vorhanden war, wurde in dieser Phase weggedrückt oder in unschädlicher Weise zwischen die Dichtungen 25 und der Dichtfläche 27 eingeklemmt.

In Figur 5 ist die Position der Dichtungen 25 entsprechend Figur 4 dargestellt, jedoch sind die beiden Einrichtungen 20 und 21 voneinander getrennt worden. Die Schließklappen 22 und 23 sichern in dieser Position den Verschluß der Durchflußöffnungen der in Alleinstellung befindlichen Einrichtungen 20 bzw. 21.

### Liste der verwendeten Bezugszeichen

### Stand der Technik (Figur 1)

- 1: Einrichtung
- 2: Einrichtung
- 3: Dichtfläche
- 4: Dichtfläche
- 5: Dichtring
- 6: Schließklappe
- 7: Schließklappe
- 8: Flachringdichtung
- 9: Dichtung
- 10: Dichtung
- 11: Dichtfläche
- 12: Dichtfläche
- 13: Ringspalt
- 14: Ringspalt

### Ausführungsbeispiel (Figuren 2 bis 5)

- 20: Einrichtung
- 21: Einrichtung
- 22: Schließklappe
- 23: Schließklappe
- 24: Nut
- 25: Dichtung
- 26: Schenkel
- 27: Dichtfläche
- 28: Schenkel
- 29: Wulst
- 30: Hohlraum
- 31: Dichtfläche
- 32: Fläche
- 33: Fläche
- 34: Berührungsebene
- 35: Raum

## Patentansprüche

1. Dichtsystem für eine Schließklappe (22) an einer Durchlaßöffnung einer Einrichtung, die mit einer gleichartigen Schließklappe (23) an einer anderen Einrichtung in gekuppelter Stellung in einer Dichtebene parallel aneinanderliegt und derart zusammenwirkt kann, daß die Innenräume der beiden Einrichtungen miteinander verbunden werden können, wobei die Schließklappe (22, 23), zur Abdichtung gegenüber einer zugehörigen Durchlaßöffnung in der Schließstellung, an ihrem Umfang eine Nut (24) aufweist, in der eine Dichtung gelagert ist, die einen Hohlraum aufweist, der mit einem inneren Überdruck beaufschlagt werden kann, **dadurch gekennzeichnet, daß** die Nut (24) an der Schließklappe (22, 23) beidseitig von ringförmigen Schenkeln (26, 28) begrenzt wird, wobei der Schenkel (26), der in der Schließstellung die Nut (24) zum Innenraum der jeweiligen Einrichtung (20, 21) begrenzt, bis nahe an die Dichtfläche (27) der Durchflußöffnung heranreicht und der andere Schenkel (28) gegenüber dem ersteren radial verkürzt ist, daß die Dichtung (25) im Bereich radial außerhalb des verkürzten Schenkels (28) eine elastische Wulst (29) aufweist, die den verkürzten Schenkel (28) axial übergreift und in ungekuppelter Stellung der Einrichtungen (20, 21) die Dichtebene (34) zwischen den Schließklappen mindestens teilweise überragt, und daß der Hohlraum (30) in der Dichtung (25) mit einer Einrichtung zur Erzeugung eines Druckes oder eines Vakuums verbunden werden kann.

2. Dichtsystem nach Anspruch 1, **dadurch gekennzeichnet, daß** der Hohlraum (30) innerhalb der Dichtung (25) bis in die elastische Wulst (29) ausgebildet ist.

3. Dichtsystem nach Anspruch 1, **dadurch gekennzeichnet, daß** die Dichtung (25) derart ausgebildet ist, daß sie in der Schließstellung der Schließklappen (22, 23) und bei Atmosphärendruck im Hohlraum (30) mit ihrem gesamten Umfang an der Dichtfläche (27) der zugehörigen Durchlaßöffnung anliegt und daß die Dichtung (25) unter der Wirkung eines Vakuums im Hohlraum (30) von der Dichtfläche (27) entfernt werden kann.

4. Dichtsystem nach einem der vorhergehenden Ansprüche, **dadurch gekennzeichnet, daß** die Dichtung elastische ringförmige Dicht- und/oder Haltestreifen aufweist, die die ringförmigen Schenkel außerhalb der Nut übergreifen.

## Claims

1. Sealing system for a closing shutter (22) on a through-passage opening of an apparatus, which butts against the same type of closing shutter (23) on another apparatus, parallel to the same, along a sealing plane in the coupled position, and can interact therewith such that the interiors of the two apparatuses can be connected to one another, it being the case that, for sealing in relation to an associated through-passage opening in the closed position, the closing shutter (22, 23) has a peripheral groove (24) in which a seal is mounted, the latter having a cavity (30) which can be subjected to internal positive pressure, **characterized in that** the groove (24) on the closing shutter (22, 23) is bounded on both sides by annular legs (26, 28), the leg (26), which bounds the groove (24) in the direction of the interior of the respective apparatus (20, 21) in the closed position, extending into the vicinity of the sealing surface (27) of the throughflow opening and the other leg (28) being shortened radially in relation to the first leg, **in that** the seal (25) has an elastic bead (29) in the region radially outside the shortened leg (28), said bead engaging axially over the shortened leg (28) and, with the apparatuses (20, 21) in the uncoupled position, engaging, at least in part, over the sealing plane (34) between the closing shutters, and **in that** the cavity (30) in the seal (25) may be connected to a device for producing a pressure or a vacuum.

2. Sealing system according to Claim 1, **characterized in that** the cavity (30) within the seal (25) extends into the elastic bead (29).

3. Sealing system according to Claim 1, **characterized in that** the seal (25) is designed such that, in the closed position of the closing shutters (22, 23) and in the case of atmospheric pressure in the cavity (30), it butts, by way of its entire periphery, against the sealing surface (27) with the associated through-passage opening, and that, under the action of a vacuum in the cavity (30), the seal (25) can be removed from the sealing surface (27).

4. Sealing system according to one of the preceding claims, **characterized in that** the seal has elastic annular sealing and/or retaining strips which engage over the annular legs outside the grooves.

## Revendications

1. Système d'étanchéité pour un clapet de fermeture (22) d'un orifice de passage d'un dispositif, qui est juxtaposé en parallèle dans un plan d'étanchéité en position accouplée à un clapet de fermeture identique (23) d'un autre dispositif et peut coopérer avec lui de telle sorte que les espaces internes des deux dispositifs puissent être connectés l'un à l'autre, le clapet de fermeture (22, 23), pour réaliser l'étanchéité par rapport à un orifice de passage associé dans la position de fermeture, présentant sur sa périphérie une rainure (24) dans laquelle est placé un joint qui présente un espace creux (30) qui peut être sollicité avec une surpression interne, **caractérisé en ce que** la rainure (24) est limitée au niveau du clapet de fermeture (22, 23) des deux côtés par des branches annulaires (26, 28), la branche (26), qui limite la rainure (24) dans la position de fermeture vers l'espace interne du dispositif respectif (20, 21), s'étendant jusqu'à proximité de la surface d'étanchéité (27) de l'orifice de passage et l'autre branche (28) étant raccourcie radialement par rapport à la première, **en ce que** le joint (25) présente, dans la région radialement à l'extérieur de la branche raccourcie (28) un bourrelet élastique (29) qui vient en prise axialement par le dessus sur la branche raccourcie (28) et qui dépasse au moins partiellement dans la position désaccouplée des dispositifs (20, 21) au-delà du plan d'étanchéité (34) entre les clapets de fermeture, et **en ce que** l'espace creux (30) dans le joint (25) peut être connecté à un dispositif pour générer une pression ou un vide.

2. Système d'étanchéité selon la revendication 1, **caractérisé en ce que** l'espace creux (30) est réalisé à l'intérieur du joint (25) jusque dans le bourrelet élastique (29).

3. Système d'étanchéité selon la revendication 1, **caractérisé en ce que** le joint (25) est réalisé de telle sorte qu'il s'applique, dans la position de fermeture des clapets de fermeture (22, 23) et lorsque l'espace creux (30) est à la pression atmosphérique, avec toute sa périphérie contre la surface d'étanchéité (27) de l'orifice de passage associé et **en ce que** le joint (25) peut être enlevé de la surface d'étanchéité (27) par l'application d'un vide dans l'espace creux (30).

4. Système d'étanchéité selon l'une quelconque des revendications précédentes, **caractérisé en ce que** le joint présente des bandes d'étanchéité et/ou de maintien élastiques annulaires, qui viennent en prise par le dessus avec la branche annulaire en dehors de la rainure.
